# EUROPEAN PATENT APPLICATION

(11) **EP 4 495 074 A1**
(43) Date of publication of application: **22.01.2025**
(21) Application number: 23186217.8
(22) Date of filing: 18.07.2023
(51) Int. Cl.: C03B 5/235, F23J 15/00

(54) **A PLANT FOR PRODUCING GLASS FIBERS**

(71) Applicant: 3B Fibreglass, 4651 Battice (BE)
(72) Inventor: Carpentier, Martin, 4651 Battice (BE)
(74) Representative: BiiP bv

(57) **Abstract**

The present invention is directed to a plant for producing glass fibers, comprising:
i. an oxyfiring furnace to heat a glass fiber precursor composition, comprising at least one oxy-burner assembly configured for combustion of a fuel-oxygen mixture, a forehearth configured for conveying molten glass, and a bushing for fiberization of the molten glass;
ii. an exhaust channel configured for conducting flue gas produced during the combustion from the furnace to the flue;
iii. an ammonia or urea injection unit configured to inject an ammonia or urea into the flue gas within the exhaust channel;
iv. a cooling system configured for cooling the flue gas in the exhaust channel to obtain a flue gas temperature between 900°C and 1050°C at the ammonia or urea injection unit.

## Description

### TECHNICAL FIELD

The present invention generally relates to a plant for producing glass fibers, in particular a plant for producing glass fibers using oxy-fuel combustion.

### BACKGROUND

In glass fiber production, the use of oxygen or oxygen-enriched air as the oxidant, so-called oxy-fuel combustion, is commonly used as it delivers the high temperatures above 1200°C, or even above 1400°C required for glass fiber production while reducing fuel combustion as well as emission of pollutants.

A particular advantage of using this oxy-fuel combustion not only for glass fiber production, but for the glassmaking industry in general, is that the amount of NOx released to the environment can be considerably reduced, which is of high importance given the recent stringent environmental laws and regulations, in particular with regards to NOx.

It is generally known (see eg. US5233934) that the NOx level in flue gas can be lowered by reacting the NOx with ammonia, to produce harmless nitrogen and water as reaction products. The reaction can occur at relatively high temperatures without a catalyst, or at lower temperatures in the presence of a catalyst. The former is known in the art as selective non-catalytic reduction (SNCR), and the latter is known as selective catalytic reduction (SCR). In a process modification, both SNCR and SCR may be performed simultaneously on the same flue gas stream.

However, as stated in US20080153042A1, referring specifically to oxy-firing combustion processes for glass melting furnaces, incinerators, calciners and kilns, SNCR, although more suitable at higher temperatures, is not adaptable to combustion processes producing flue gasses above 2000°F (1093°C).

Therefore, in an attempt to alleviate the foregoing problem, US20080153042A1 proposes to modify the combustion process itself by feeding sufficient amounts of oxygen in the combustion chamber not only decreasing the ability of carbon monoxide to inhibit the conversion of NOx to molecular nitrogen, but more importantly to reduce the temperature of the flue gas emerging from the combustion to a temperature within which the efficiency of the selective non-catalytic reduction reaction is increased.

Other known techniques in flat glass production are controlling the flue gas temperature by injecting water or cooled flue gasses in the stack to decrease the flue gas temperature.

However, specifically with regards to glass fiber production making use of oxy-fuel combustion, reducing the combustion process temperature to decrease the flue gas temperature is not an option, or even not possible as the glass fiber production process requires temperatures above the suitable temperature range for SNCR.

Further, obviously, feeding water, air or other gasses such as oxygen in the combustion chamber, increases the volume flue gas, such that in case subsequent flue gas treatment would be desired, effort and cost would increase.

In addition, the above techniques would require additional flue gas treatments for example in case it would be desired to keep the CO2 concentration sufficiently high when aiming capturing CO2.

Given the above, it is a first objective of the present invention to provide a plant for glass fiber production including NOx removal compatible with the high temperatures of oxy-fuel combustion.

More specifically, it is an objective of the present invention to provide a plant for glass fiber production including an NOx removal process which does not require a reduction of the combustion process temperature.

A second objective of the present invention is also to provide a plant for glass fiber production including an NOx removal process which would allow additional flue gas treatments, e.g. capturing CO2.

### SUMMARY

The present invention is directed to a plant for producing glass fibers, comprising:
i. an oxyfiring furnace to heat a glass fiber precursor composition, comprising at least one oxy-burner assembly configured for combustion of a fuel-oxygen mixture, a forehearth configured for conveying molten glass, and a bushing for fiberization of the molten glass;
ii. an exhaust channel configured for conducting flue gas produced during the combustion from the furnace to the flue;
iii. an ammonia or urea injection unit configured to inject an ammonia or urea into the flue gas within the exhaust channel;
iv. a cooling system configured for cooling the flue gas in the exhaust channel to obtain a flue gas temperature between 900°C and 1050°C at the ammonia or urea injection unit.

### BRIEF DESCRIPTION OF THE DRAWINGS

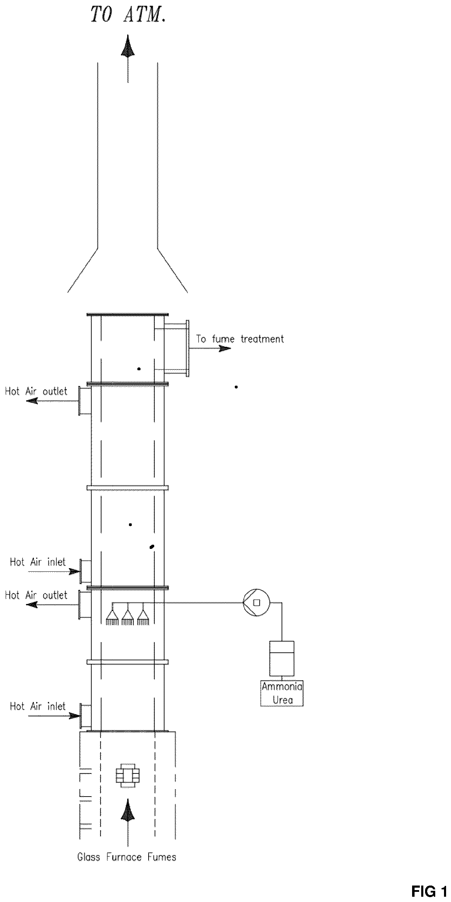

FIG 1 illustrates a particular embodiment of a plant in accordance with the present invention.

### DETAILED DESCRIPTION

The present invention is directed to a plant for producing glass fibers, comprising:
i. an oxyfiring furnace to heat a glass fiber precursor composition, comprising at least one oxy-burner assembly configured for combustion of a fuel-oxygen mixture, a forehearth configured for conveying molten glass, and a bushing for fiberization of the molten glass;
ii. an exhaust channel configured for conducting flue gas produced during the combustion from the furnace to the flue;
iii. an ammonia or urea injection unit configured to inject an ammonia or urea into the flue gas within the exhaust channel;
iv. a cooling system configured for cooling the flue gas in the exhaust channel to obtain a flue gas temperature between 900°C and 1050°C at the ammonia or urea injection unit.

In accordance with the invention, the cooling system is configured for cooling high temperature flue gas generated by an oxyfiring combustion process for glass fiber production to temperatures compatible with ammonia or urea based SNCR of NOx, such that efficient NOx removal becomes compatible with the high temperatures of oxy-fuel combustion.

More specifically, a system combining injecting ammonia or urea in the exhaust channel of the furnace and configuring the cooling system such as to obtain a flue gas temperature between 900°C and 1050°C at the ammonia or urea injection unit, enables SNCR based NOx removal which not requires a reduction of the oxyfiring combustion temperature in glass fiber production.

Further, such system may provide both for efficient NOx removal and efficient ammonia or urea consumption, thereby avoiding ammonia or urea slip in the flue gas.

In particular, a subsequent flue gas treatment may be the production of high purity carbon dioxide. When oxygen-enriched air or substantially pure oxygen is used as the combustion oxidant, the exhaust flue gas usually contains about up to 60% volume water vapor, and only about 10% volume each of oxygen, argon and nitrogen, making the flue gas a suitable source of carbon dioxide. However, the flue gas also contains amongst others between 0.1 and 0.2% volume NOx. These amounts of NOx have to be significantly and efficiently reduced in order to obtain a substantially pure flue gas that might be used for production of high purity carbon dioxide meeting the current NOx standard, i.e. containing not more than 5 ppm (mass) NOx.

In an embodiment of the present invention, the cooling system for the cooling the flue gas in the exhaust channel comprises a heat exchanger configured for cooling the flue gas to obtain a flue gas temperature between 900°C and 1050°C at the ammonia or urea injection unit. Said heat exchanger may be part of a heat recovery system, wherein flue gas heat is recovered for example for heating a utility fluid such as hot process air, or hot process water, or steam.

The cooling system may be configured such that its cooling power and/or efficiency is adaptable depending on the most suitable temperature range to be obtained for applying SNCR on a variable volume of flue gas to obtain both efficient NOx reduction and ammonia or urea consumption. A possible configuration may be that a temperature sensor senses the flue gas temperature upstream and downstream the ammonia or urea injection unit to adapt the air debit of the heat exchanger depending on the required temperature gradient. In addition, an ammonia or urea sensor could be placed downstream the ammonia or urea injection unit for measuring ammonia or urea slip, enabling adjustment of the reagent injection flow rate, optionally as part of a feedback loop system.

In an embodiment of the present invention, the ammonia or urea injection unit as well as the heat exchanger may be incorporated in a heat recovery system.

In addition to a heat exchanger, the cooling system may further comprise additional cooling means, such as injection of cold fumes.

In a particular embodiment in accordance with the present invention, the cooling system may additionally comprise a cooled flue gas injection system configured for recycling and injecting cooled flue gas into the exhaust channel upstream the ammonia or urea injection unit. Such cooled flue gas injection system may be used for optimizing the temperature range of the cooled flue gas upstream the SNCR.

In an embodiment of the present invention, the heat exchanger may be located upstream the ammonia or urea injection unit to cool the flue gas before entering the SNCR reaction zone.

Alternatively, the heat exchanger may be located downstream the ammonia or urea injection unit to cool the flue gas leaving the SNCR reaction zone, in combination with a cooled flue gas injection system configured for recycling and injecting cooled flue gas into the exhaust channel upstream the ammonia or urea injection unit. The benefit thereof is that the requirement with regards to heat resistance of the heat exchanger might be less stringent.

Further alternatively, the heat exchanger may be partially situated upstream and partially downstream the ammonia or urea injection unit.

In a preferred embodiment, the ammonia or urea injection unit may be at least partially incorporated into the heat exchanger, in which case the ammonia or urea injection unit, or at least the SNCR reaction zone, is subjected to cooling as well. This may also temper the required heat resistance of the ammonia or urea injection unit, or at least the SNCR reaction zone.

In an embodiment of the present invention, a plant for producing glass fibers is provided wherein the oxyfiring furnace comprises a refractory stack, and wherein the heat exchanger and the ammonia or urea injection unit may be located substantially on top of the refractory stack. In such case the heat exchanger must be highly heat resistant given the flue gas temperature leaving the refractory stack.

In an embodiment of the present invention, the ammonia used in the SNCR may be any type of ammonia suitable for applying SNCR in the context of oxyfiring flue gas. Preferably it is selected from the group consisting of aqueous ammonia, anhydrous ammonia, urea-based ammonia or a combination thereof.

The plant according to any of the foregoing claims, wherein the ammonia or urea injection unit comprises at least one nozzle located in the exhaust channel and configured to inject an ammonia or urea into the flue gas. In case of a plurality of nozzles, the nozzles may be installed for injecting at the same height along the perimeter of the exhaust channel, or the plurality of nozzles may be divided in a plurality of stages along the exhaust channel.

In accordance with the present invention, the heat exchanger may be convective or radiative, optionally depending on being part of a heat recovery system for producing steam, hot process air, or hot process water.

In an embodiment of the present invention, the heat exchanger may be any type of heat exchanger suitable for cooling an oxyfiring furnace exhaust channel. Preferably, the heat exchanger is further selected for being part of a heat recovery system, such as for example a radiative double shell heat recuperator.

In an embodiment of the present invention, the heat exchanger may be located substantially on top of the refractory stack and supported by a counterweight support system.

In a further embodiment of the present invention, the plant for producing glass fibers may further comprise a SCR unit in addition to the ammonia or urea injection unit and its corresponding flue gas cooling system.

In a further embodiment of the present invention, the plant for producing glass fibers may further comprise an SOx removal unit configured for removing SOx from the flue and/or a CO2 processing unit following the NOx and SOx removal unit and configured for capturing CO2.

As illustrated in FIG 1, a particular embodiment of the plant according to the present invention is further described:

The oxyfiring combustion flue gas leaves the furnace at 1200°C and enters a double shell radiative heat exchanger or recuperator, placed on the refractory stack and supported by a counterweight support system (not shown). The function of the counterweight system is to support a major portion of the heat exchanger weight so that only a small portion of the weight is resting on the refractory stack. Generally, the counterweight system will support approximately 80% of the weight which includes the heat exchanger with insulation and sheet metal covering, metal stack, lifting frame, a portion of the hot air ducts, a portion of the cold air piping, and glass slag.

The radiative exchanger has a number of incorporated injection orifices or nozzles for injecting ammonia or urea in the flue gas for SNCR Nox removal at a flue gas temperature between 1050°C and 900°C. The heat exchanger hot air inlet is located upstream the SNCR reaction zone, and its outlet substantially at the level of the injection nozzle(s).

Downstream the SNCR reaction zone, an additional recuparator is installed to further cool the flue gas leaving the SNCR reaction zone for subsequent treatment.

## Claims

1. A plant for producing glass fibers, comprising:
i. an oxyfiring furnace to heat a glass fiber precursor composition, comprising at least one oxy-burner assembly configured for combustion of a fuel-oxygen mixture, a forehearth configured for conveying molten glass, and a bushing for fiberization of the molten glass;
ii. an exhaust channel configured for conducting flue gas produced during the combustion from the furnace to the flue;
iii. an ammonia or urea injection unit configured to inject an ammonia or urea into the flue gas within the exhaust channel;
iv. a cooling system configured for cooling the flue gas in the exhaust channel to obtain a flue gas temperature between 900°C and 1050°C at the ammonia or urea injection unit.

2. The plant according to claim 1, wherein the cooling system comprises a heat exchanger configured for cooling the flue gas.

3. The plant according to claim 2, wherein the furnace comprises a refractory stack and wherein the heat exchanger and the ammonia or urea injection unit are located substantially on top of the refractory stack.

4. The plant according to claim 2 or 3, wherein the heat exchanger may be partially situated upstream and partially downstream the ammonia or urea injection unit.

5. The plant according to any of the foregoing claims, wherein the ammonia or urea injection unit may be at least partially incorporated into the cooling system.

6. The plant according to any of the foregoing claims, wherein the cooling system comprises a cooled flue gas injection system configured for recycling and injecting cooled flue gas into the exhaust channel upstream the ammonia or urea injection unit.

7. The plant according to any of the foregoing claims, wherein the ammonia or urea injection unit comprises at least one nozzle incorporated in the heat exchanger and configured to inject an ammonia or urea into the flue gas.

8. The plant according to any of claims 2 to 7, wherein the heat exchanger is a radiative heat exchanger.

9. The plant according to claim 3, wherein the heat exchanger is supported by a counterweight support system.

10. The plant according to any of the above claims, further comprising a SCR unit.

11. The plant according to any of the above claims, further comprising a SOx removal unit configured for removing SOx from the flue and/or a CO2 processing unit following the NOx and SOx removal unit and configured for capturing CO2.
